Europäisches Patentamt

European Patent Office

Office européen des brevets

(19)

(11) Veröffentlichungsnummer: **0 286 693**
**B1**

(12) **EUROPÄISCHE PATENTSCHRIFT**

(45) Veröffentlichungstag der Patentschrift:
**27.12.90**

(51) Int. Cl.⁵: **B60N 2/02**

(21) Anmeldenummer: **87104066.3**

(22) Anmeldetag: **19.03.87**

(54) Kraftfahrzeugsitz, der durch Kippen seiner Rückenlehne längsverschiebbar ist.

(43) Veröffentlichungstag der Anmeldung:
**19.10.88 Patentblatt 88/42**

(45) Bekanntmachung des Hinweises auf die Patenterteilung:
**27.12.90 Patentblatt 90/52**

(84) Benannte Vertragsstaaten:
**FR**

(56) Entgegenhaltungen:
**EP-A- 0 135 596**
**EP-A- 0 196 773**
**DE-A- 2 233 915**
**DE-A- 2 434 409**
**DE-A- 2 640 425**
**DE-A- 2 812 322**
**DE-A- 2 813 534**
**DE-A- 3 151 105**
**DE-A- 3 226 198**

(73) Patentinhaber: **C. Rob. Hammerstein GmbH,
Postfach 13 01 18 Merscheiderstrasse 167,
D-5650 Solingen 13(DE)**
Patentinhaber: **Firma Daimler-Benz AG, Postfach,
D-7000 Stuttgart 60(DE)**

(72) Erfinder: **Bauer, Heinz, Hammerstrasse 9,
D-5650 Solingen 11(DE)**
Erfinder: **Becker, Burckhard, Dipl.-Ing.,
Obenkatternberg 25, D-5650 Solingen 1(DE)**
Erfinder: **Frohnhaus, Ernst-Reiner, Hammerstrasse 13,
D-5650 Solingen 11(DE)**
Erfinder: **Gedig, Alfred, Dipl.-Ing., Hammerstrasse 28,
D-5650 Solingen 11(DE)**
Erfinder: **Klink, Josef, Dipl.-Ing., Im Kranich 5,
D-7270 Nagold(DE)**
Erfinder: **Koucky, Antonin, Ernst-Barlach-Strasse 81,
D-7032 Sindenfingen(DE)**

(74) Vertreter: **Bauer, Wulf, Dr., Wolfgang-Müller-Strasse 12,
D-5000 Köln 51 (Marienburg)(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Kraftfahrzeugsitz, der durch Kippen seiner Rückenlehne längsverschiebbar ist und einen Sitzteil sowie eine durch eine Arretiervorrichtung arretierbare Längsführung aufweist,
- die aus einer Bodenschiene und einer Sitzschiene aufgebaut ist, von denen die Bodenschiene mit dem Kraftfahrzeugchassis verbunden ist und eine Rastenleiste aufweist und die Sitzschiene einerseits den Sitzteil trägt und andererseits über einen Tragarm und über ein ein- und feststellbares Rückenlehnengelenk mit der Rückenlehne verbunden ist.

Insbesondere bei zweitürigen Personenkraftwagen mit Fondsitzen besteht das bekannte Problem, daß der Zugang zu den hinteren Sitzen durch die Vordersitze beschränkt ist. Bei dem aus der DE-A 2 813 534 bekannten Kraftfahrzeugsitz der eingangsgenannten Art wird die Rückenlehne nach Lösen einer mit einem Sitzteilrahmen zusammenwirkenden Sperreinrichtung in Fahrtrichtung nach vorn gekippt, wobei der Sitzteil mitgenommen und über ein Verbindungsgestänge nach vorn verlagert wird. Dieses Verbindungsgestänge verbindet den Sitzteilrahmen mit der Sitzschiene der Längsführung und dient zugleich der Sitzhöheneinstellung. Die Längsführung selbst bleibt arretiert. Durch geeignete Vorkehrungen ist sichergestellt, daß der Kraftfahrzeugsitz nach einem Verkippen seiner Rückenlehne wieder die zuvor eingenommene Sitzeinstellung wiedergewinnt.

Bei dem vorbekannten Kraftfahrzeugsitz wird die beschriebene Längsverschiebbarkeit durch Elemente der Sitzhöheneinstellung ermöglicht. Dies hat den Nachteil, daß lediglich mit einer Sitzhöheneinstellung versehene Kraftfahrzeugsitze in der vorbekannten Weise längsverschiebbar sind, um den Zugang zu den Fondsitzen zu ermöglichen. Kraftfahrzeugsitze ohne eine Sitzhöheneinstellung lassen sich auf diese Weise nicht nach vorn verschieben. Hier setzt die Erfindung ein, sie hat es sich zur Aufgabe gemacht, diesen Nachteil des bekannten Kraftfahrzeugsitzes zu vermeiden und den bekannten Kraftfahrzeugsitz der eingangsgenannten Art dahingehend weiterzubilden, daß unabhängig von einer eventuell vorgesehenen Sitzhöheneinstellung der Kraftfahrzeugsitz unter Verwendung möglichst einfacher, mechanischer Mittel nach vorn verschiebbar ist und hierdurch ein möglichst bequemer Zugang zu den Fondsitzen geschaffen wird. Dabei muß einerseits ein sicherer Funktionsablauf und andererseits ein präzises Wiederfinden der zuvor eingenommenen Sitzposition beibehalten bleiben.

Diese Aufgabe wird ausgehend von dem bekannten Kraftfahrzeugsitz der eingangsgenannten Art dadurch gelöst,
- daß die Rückenlehne drehfest mit einem Steuerhebel verbunden ist, der vom Rückenlehnengelenk in Richtung zur Sitzschiene vorspringt und einen Mitnehmer aufweist, und
- daß an der Sitzschiene einerseits ein Freigabehebel angelenkt ist,
der eine Löseflanke und eine Halteflanke aufweist,

die jeweils mit dem Mitnehmer zusammenwirken und der über eine Mitnehmereinheit mit der Arretiervorrichtung verbunden ist
und andererseits ein Schlepphebel angeordnet ist,
der eine Betätigungsbucht hat, in die der Mitnehmer eingreift,
der einen nach unten in Richtung der Rastenleiste der Bodenschiene vorspringenden und dieser zugeordneten Merkzapfen aufweist, und
der über ein Schubgelenk mit der Sitzschiene verbunden ist,
so daß in Normalposition der Rückenlehne der Freigabehebel und der Schlepphebel inaktiv sind,
in einer Zwischenposition der Rückenlehne der Merkzapfen in die Rastenleist eingegriffen hat, die Arretiervorrichtung aber arretiert ist und
in einer gekippten Position der Rückenlehne die Arretiervorrichtung freigegeben und Sitzschiene mit Sitzteil und Rückenlehne innerhalb des durch das Schubgelenk festgelegten Weges gegenüber der Bodenschiene längsverschiebbar sind.

Gegenüber dem vorbekannten Kraftfahrzeugsitz hat diese Ausbildung den Vorteil, daß der Sitzteil und die Rückenlehne nicht angehoben werden müssen, wenn die Verschiebung nach vorn erfolgt. Die Betätigung ist also mit geringerem Kraftaufwand möglich. Beibehalten wird der Vorteil, daß die Betätigung über den relativ langen Hebelarm der Rückenlehne erfolgt, wodurch die aufzubringenden Verstellkräfte zusätzlich klein bleiben. Ein entscheidender Vorteil des erfindungsgemäßen Kraftfahrzeugsitzes liegt darin, daß unabhängig von der jeweils voreingestellten Längsposition des Kraftfahrzeugsitzes ein relativ großer Verschiebungsweg und damit ein relativ freier Zugang zu den Fondsitzen erreicht wird. Bei dem vorbekannten Kraftfahrzeugsitz ist die Breite des Zugangs zu den Fondsitzen davon abhängig, welche Längsverstellungsposition der Kraftfahrzeugsitz hat. Dies ist bei dem erfindungsgemäßen Kraftfahrzeugsitz nicht der Fall. Dort wird die Verschiebungsstrecke des Kraftfahrzeugsitzes nach vorn entweder durch den freien Weg des Schubgelenkes oder durch einen in der Längsführung selbst vorgesehenen Endanschlag begrenzt. Grundsätzlich kann der erfindungsgemäße Kraftfahrzeugsitz so ausgelegt werden, daß die Längsverschiebung immer bis in Anschlagstellung der beiden Schienen verschoben wird. Dadurch ist der Zugang zu den hinteren Sitzen gut möglich.

Der erfindungsgemäße Kraftfahrzeugsitz hat den Vorteil, durch relativ wenige, zusätzliche Teile für den Fondeinstieg längsverschiebbar zu sein. Dadurch daß der Sitzschiene zwei separate Hebel, nämlich der Freigabehebel und der Schlepphebel, zugeordnet sind, ist sichergestellt, daß bei Beginn einer Sitzverstellung zunächst stets und zwangsweise der Merkzapfen in eine Rastöffnung der Bodenschiene eingreift, bevor die Arretiervorrichtung der Längsführung gelöst wird. Gegenläufig laufen die entsprechenden Schritte beim Zurückschwenken der Rückenlehne in die Normalposition ab. Dadurch ist stets gewährleistet, daß die zuvor eingestellte Position der Längsführung später exakt wieder eingenommen wird. Die für die freie Längsverschiebbarkeit benötigten Bauelemente lassen sich platzsparend und unauffällig an einem Kraftfahrzeugsitz anbringen, ohne die sonstige Funktion dieses Kraftfahrzeugsitzes zu beeinträchtigen. Es ist sogar möglich, einige Teile innerhalb eines Längskanals einer Längsführung versteckt anzuordnen.

In einer bevorzugten Weiterbildung der Erfindung ist die Mitnehmereinrichtung als Schleppkupplung und vorzugsweise als Bowdenzug ausgebildet, die den Freigabehebel mit einem Betätigungshebel der Arretiervorrichtung verbindet. Der Freigabehebel selbst kann dabei direkt oder über eine Schleppverbindung mit dem eigentlichen, normalerweise vor der Sitzvorderkante vorragenden Betätigungshebel für die Arretiervorrichtung verbunden sein.

In zweckmäßiger Weiterbildung wird die Rastenleiste der Arretiervorrichtung zugleich als Rastenleiste des Merkzapfens genutzt, wobei die Rastenleiste zusätzliche Rastfenster hat. Demgegenüber erfordert eine zusätzliche Rastenleiste für den Merkzapfen mehr Aufwand, einer derartige zusätzliche Rastenleiste müßte dieselbe Peridizität wie die Rastenleiste der Arretiervorrichtung haben.

In weiterer Verbesserung der Erfindung ist ein zweites Schubgelenk zwischen dem Schlepphebel und dem Freigabehebel vorgesehen, daß denselben Verschiebeweg wie das (erste) Schiebegelenk hat. Hierdurch wird ein besserer Halt der beiden Hebel, insbesondere aber des Schlepphebels erreicht, da letztere im Gegensatz zum Freigabehebel nicht an der Sitzschiene selbst angelenkt werden kann und dadurch die Gefahr bestehen könnte, daß der Schlepphebel klappert oder seine Position verändert, wodurch der Merkzapfen möglicherweise zwischen zwei Rastfenster gelangen könnte.

In vorzugsweiser Weiterbildung hat die Rückenlehne neben der vorbekannten Schnellentriegelung des Rückenlehnengelenks zumindest einen Anschlag, der die Klappbewegung der Rückenlehne nach vorn begrenzt. Dadurch wird für den Benutzer der Übergang der reinen Kippbewegung der Rückenlehne in eine Verschiebebewegung sinnfälliger und auf mechanischer Seite wird erreicht, daß die Halteflanke des Freigabehebels nicht zu lang ausgebildet werden muß.

Weitere Vorteile und Merkmale der Erfindung ergeben sich aus den übrigen Ansprüchen sowie der nun folgenden Beschreibung eines beispielhaften, nicht einschränkend zu verstehenden Ausführungsbeispiels der Erfindung, das unter Bezugnahme auf die Zeichnung im folgenden näher erläutert wird. In dieser zeigen:

Fig. 1 eine Seitenansicht eines Kraftfahrzeugsitzes (in schematischer Darstellung) mit in Normalposition befindlicher Rückenlehne und

Fig. 2 eine Darstellung entsprechend Fig. 1, jedoch in gekippter Position der Rückenlehne.

Der aus den Figuren ersichtliche Kraftfahrzeugsitz hat eine Rückenlehne 20, ein Sitzteil 22 und eine Längsführung 24. Letztere besteht aus jeweils einer Sitzschiene 26 und einer Bodenschiene 28 für beide Sitzseiten, in der Figur ist lediglich eine Sitzseite gezeigt und es genügt, die im folgenden zu beschreibende Verstellvorrichtung lediglich an einer Sitzseite vorzusehen. Dies soll nicht ausschließen, daß sie an beiden Sitzseiten angeordnet ist.

Mit der Sitzschiene 26 ist einerseits der Sitzteil 22 verbunden, andererseits ist im hinteren Bereich der Sitzschiene 26 die Rückenhlehne 20 gehalten, dies erfolgt über einen fest mit der Sitzschiene 26 verbundenen und in Richtung der Rückenlehne 20 aufragenden Tragarm 30 und ein zwischen diesem Tragarm 30 und der Rückenlehne 20 vorge sehenes, in den Figuren nicht dargestelltes, jedoch ansich bekanntes Rückenlehnengelenk. Dieses kann in bekannter Weise durch einen im oberen Bereich der Rückenlehne befindlichen Betätigungshebel schnellentriegelt werden, so daß unabhängig von der vorgesehenen Feinverstellung die Rückenlehne 20 frei bewegbar gekippt werden kann.

Im gezeigten Ausführungsbeispiel ist die Rückenlehne 20 um eine im Tragarm 30 gelagerte Achse 32 schwenkbar. Um diese Achse 32 erfolgt auch die Feinverstellung mittels des Rückenlehnengelenks. Es ist aber auch möglich, an der Achse den unteren Arm eines ansich bekannten Gelenkbeschlages zu befestigen, dessen oberer Arm mit der Rückenlehne 20 selbst verbunden ist. Dann erfolgt die Feinverstellung um eine andere Schwenkachse als die Achse 32 und es ergibt sich der Vorteil, daß die Schwenkbewegungen für die Feineinstellung und die Kippbewegung völlig voneinander getrennt sind, so daß das der Feineinstellung dienende Rückenlehnengelenk arretiert bleiben kann, wenn die Rückenlehne gekippt werden soll. Es ist dann nicht notwendig, die Arretierposition des Rückenlehnengelenks zu speichern, um beim Zurückkippen der Rückenlehne 20 dieselbe Neigungsposition wieder zu erhalten.

Die Bodenschiene 28 ist normalerweise mit dem (nicht dargestellten) Kfz-Chassis verbunden, es ist aber auch möglich, daß zwischen ihr und dem Kfz-Chassis eine Vorrichtung zur Höhenverstellung angeordnet ist, beispielsweise eine Verstellvorrichtung mit Keil oder eine Verstellvorrichtung entsprechend der DE-A 28 13 534. Mit dem Begriff "Sitzschiene" ist auch ein eventuell vorhandener Sitzträger umfaßt, der entweder mit einem Teilbereich die Sitzschiene ausbildet oder separat ausgeführt und mit der Sitzschiene 26 verbunden ist.

Die Rückenlehne 20 ist über die mit ihr verbundene Achse 32 drehfest mit einem Steuerhebel 34 verbunden, der vom unteren Bereich der Rückenlehne 20 in Richtung zur Sitzschiene 26 ragt und im oberen Bereich der Sitzschiene 26 einen Mitnehmer 36 aufweist. Der gezeigte Steuerhebel 34 ist im wesentlichen L-förmig, sein einer Schenkel ragt nach unten und trägt den als Bolzen ausgebildeten Mitnehmer 36, der andere Arm ragt nach hinten und trägt einen Anschlagzapfen 38. Sofern das Rückenlehnengelenk zwischen dem Steuerhebel 34 und der Achse 32 angeordnet ist, ist der Anschlagzapfen nicht mit der Rückenlehne 20 verbunden. Ist aber im Gegensatz zum gezeigten Ausführungsbeispiel und wie oben beschrieben die Achse 32 mit dem unteren Arm eines Gelenkbeschlags verbunden und befindet sich die Schwenkachse der Feinverstellung oberhalb der Achse 32, so kann der Anschlagzapfen mit dem unteren Arm des Gelenkbeschlages verbunden sein. Für den Anschlagzapfen 38 sind im Tragarm ein bogenförmiger Freibereich und zwei endseitige Anschläge 40, 42 vorgesehen, die die Kippbewegung der Rückenlehne 20 in beiden Schwenkrichtungen begrenzen.

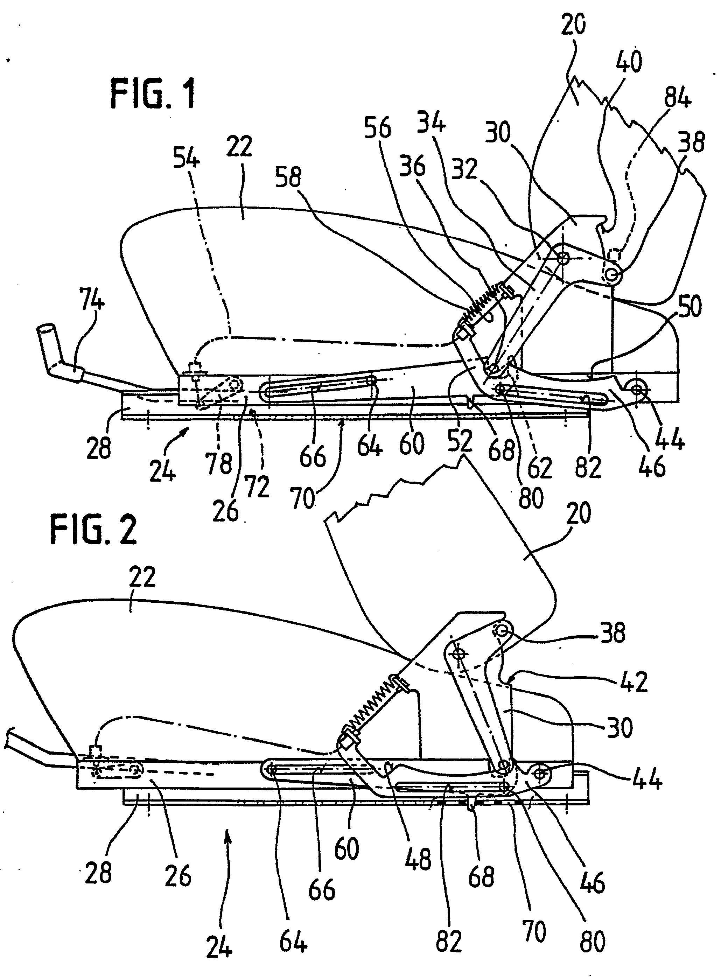

Im hinteren Bereich der Sitzschiene ist um eine Achse 44 schwenkbar ein Freigabehebel 46 angelenkt, der sich im wesentlichen in Längsrichtung der Sitzschiene 26 erstreckt und etwa dieselben Höhenabmessungen wie diese hat. Er bildet mit seinem Oberrand im linken, von der Achse 44 entfernten Bereich eine Löseflanke 48 aus, die schräg nach hinten und etwa im Winkel von 45° zur Sitzschiene 26 ansteigt und hat weiterhin eine diese fortsetzende Halte flanke 50, die in der in Figur 2 gezeigten Position des Freigabehebels 36 auf einem Kreisbogen um die Achse 32 liegt, wie er vom Mitnehmer 36 beschrieben wird. Die Löseflanke 48 hat dagegen einen größeren Abstand von der Achse 32 als die Halteflanke 50, sie verläuft zudem in einem Winkel zu ihrer Verbindung mit der Achse 32, der oberhalb des Winkels der Selbsthemmung liegt.

In Richtung zur Sitzvorderkante hin hat der Freigabehebel 46 einen nach schräg vorn oben vorspringenden Hals 52, in dessen Endbereich der Mantel eines als Mitnehmereinheit dienenden Bowdenzuges 54 befestigt ist. Das zugehörige Seil 56 ist in einer Abwinklung des Tragarms 30 befestigt, Hals 52 und Abwinklung werden durch eine Feder 58 gegeneinander gezogen, wodurch der Freigabehebel 46 beständig gegen den Mitnehmer 36 vorbelastet ist und dadurch in Anlage am Mitnehmer 36 bleibt. Zudem wird eine Klapperfreiheit erzielt. Die Länge der Halteflanke 50 ist aus den Abstand der beiden Anschläge 40, 42 abgestimmt. Es ist auch möglich, die Anschläge 40, 42 am rechten Ende der Halteflanke 50 und links seitlich neben der Löseflanke 48 vorzusehen, sie wirken dann mit dem Mitnehmer 36 zusammen.

Weiterhin ist an der Sitzschiene 26 ein Schlepphebel 60 angeordnet, der eine U-förmige, nach oben und zum Mitnehmer 36 hin offene Betätigungsbucht 62 hat, in die der Mitnehmer 36 ständig eingreift. Die Betätigungsbucht 62 ist aus Montagegründen nach oben offen, sie könnte auch abgeschlossen sein. Der Schlepphebel 60 ist über ein Schubgelenk an der Sitzschiene 26 und seiner Längsrichtung verschiebbar angeordnet, im konkreten Ausführungsbeispiel springt etwas links von der Längenmitte der Sitzschiene 26 ein mit dieser starr verbundener Bolzen 64 vor, der von einem im Schlepphebel 60 ausgeführten Langloch 66 umgriffen wird. Der freie Verschiebungsweg des Langloches 66 gegenüber dem Bolzen 64 und/oder eventuell ein vorgesehener Endanschlag der Längsführung 24 bestimmen den freien Verschiebungsweg der Sitzschiene 26 mit ihrem Sitzteil 22 und der Rückenlehne 20 gegenüber der Bodenschiene 28.

Der Schlepphebel 60 hat einen gradlinig verlaufenden, unteren Rand, von dem jedoch schräg unterhalb der Betätigungsbucht 62 ein Merkzapfen 68 nach unten vorspringt. Dieser ist normalerweise, wie Figur 1 zeigt, außer Eingriff mit einer Rastenleiste 70 der Bodenschiene 28, er kann jedoch in ein Rastfenster der Rastenleiste 70 hineingedrückt werden, wie Figur 2 zeigt. Die geometrische Abstimmung ist dabei so getroffen, daß bei einer vollständigen Arretierung der in den Figuren nicht näher dargestellten Arretiervorrichtung 72 (gezeigt ist ein Handhebel 74 und ein Betätigungshebel 78) der Merkzapfen 68 stets in ein Fenster oder eine Bucht der Rastenleiste 70 eintaucht, wenn er nach unten gedrückt wird. Der Merkzapfen 68 kann entsprechend V-förmig oder anderweitig nach unter spitzer zulaufend ausgebildet sein, damit eine gewisse Fehlpositionierung aufgrund des notwendigen Spiels des Mitnehmers 36 in der Betätigungsbucht 62 selbsttätig ausgeglichen wird.

Zur besseren Positionierung des Schlepphebels 60 ist zusätzlich noch ein zweites Schubgelenk vorgesehen, das im gezeigten Ausführungsbeispiel durch einen Bolzen 80 gebildet wird, der unterhalb der Betätigungsbucht 62 am Schlepphebel 60 vorspringt und mit einem Langloch 82 zusammenwirkt, das die gleiche effektive Länge wie das Langloch 66 hat. Es verläuft parallel zur geradlinigen Unterkante des Freigabehebels 46 und in geringem Abstand unterhalb der Halteflanke 50, die etwa die gleiche Gesamtlänge wie das Langloch 82 hat.

Das andere Ende des Bowdenzuges 54 ist mantelseitig an der Sitzschiene 26 und seilseitig am Betätigungshebel 78 der Arretiervorrichtung 72 festgelegt. Vergrößert sich der Abstand zwischen dem Hals 52 und der Abwinklung des Tragarms 30, so wird der Betätigungshebel 78, wie ein Vergleich der Figuren 1 und 2 zeigt, angehoben, er hebt im Sinne einer Schleppeinrichtung den Handhebel 74 an, wodurch die Arretiervorrichtung 72 freigegeben wird. Andere Ausbildungen ohne mechanisches Anheben des Handhebels 74 sind möglich.

Im folgenden wird die Funktion erläutert:
Figur 1 zeigt die Normalposition der Rückenlehne 20. Die beiden Hebel 46, 60 sind inaktiv, der Merkzapfen 68 befindet sich außer Eingriff mit der Rastenleiste 70, der Mitnehmer 36 befindet sich am unteren Ende der Löseflanke 48 und liegt am Hals 52 an. Dadurch steht die Unterkante des Freigabehebels 46 in einem sehr spitzen Winkel zur Längsführung 24. Die Arretiervorrichtung 72 ist arretiert.

Wird nun die Verriegelung der Rückenlehne 20 durch Betätigung eines entsprechenden, im oberen Bereich der Rükkenlehne 20 vorgesehenen (nicht dargestellten) Hebels freigegeben, so kann die Rückenlehne 20 um die Achse 32 verschwenkt werden. Innerhalb der ersten Winkelgrade einer Schwenkbewegung drückt der am unteren Ende der Löseflanke 48 anliegende und vorzugsweise als Rolle ausgebildete Mitnehmer 36 den Freigabehebel 46 und zugleich über den im Langloch 82 geführten Bolzen 80 den Schlepphebel 60 nach unten, wodurch der Merkzapfen 68 in Eingriff in ein freies Fenster der Rastenleiste 70 kommt. Dabei schwenken die beiden Hebel 46, 60 im Gegensinn zueinander, der Freigabehebel 46 schwenkt um die Achse 44, der Schlepphebel 60 um den Bolzen 64. Die Schwenkbewegung des Freigabehebels 46 führt dazu, daß ein Zug auf das Seil 56 des Bowdenzuges 54 ausgeübt wird, der jedoch erst dann zu einer Entriegelung der Arretiervorrichtung 72 führt, wenn zuvor der Merkzapfen 68 ausreichend tief in ein Fenster der Rastenleiste 70 eingegriffen hat.

Bei der Weiterführung der Schwenkbewegung der Rückenlehne 20 um ihre Achse 32 erreicht der Mitnehmer 36 das obere Ende der Löseflanke 48, wodurch die Arretiervorrichtung 72 freigegeben wird, diese Freigabe wird aufrecht erhalten, wenn der Mitnehmer 36 anschließend auf die Halteflanke 50 gelangt. In diesem Zustand verläuft der Freigabehebel 46 mit seiner Unterkante ungefähr parallel zur Längsführung 24, ebenfalls verläuft die geradlinige Oberkante des Schlepphebels 60 ungefähr bündig zur Oberkante der Sitzschiene 26. Die Rückenlehne 20 kann soweit nach vorn geklappt werden, bis der Anschlagzapfen 38 an den Anschlag 40 kommt, diese Position ist in Figur 2 gezeigt.

In der in Figur 2 gezeigten Position ist der Fahrzeugsitz nach vorn verschoben, so daß der Einstieg zu einem Fondsitz vereinfacht ist. Die Verschiebung der Längsführung 24 wird im gezeigten Ausführungsbeispiel dadurch begrenzt, daß der Anschlagzapfen 38 an den Anschlag 40 kommt, alternativ könnte auch der Bolzen 64 an das linke Ende des Langlochs 66 an schlagen, da der Schlepphebel 60 über den im Eingriff befindlichen Merkzapfen 68 mit der Bodenschiene 28 verbunden ist, wird eine weitere Verschiebung der Sitzschiene 26 nach vorn blockiert.

Beim Zurückkippen der Rückenlehne 20 laufen die beschiebenen Vorgänge umgekehrt ab. Zugleich mit dem Zurückkippen bewegt sich der Sitz innerhalb der Längsführung 24 nach hinten. Kurz vor Erreichen der Normalposition gemäß Fig. 1 rutscht zunächst der Mitnehmer 46 ausreichend tief die Löseflanke 48 herunter, so daß die Arretiervorrichtung 72 einrasten kann, bevor der Merkzapfen 68 außer Eingriff mit der Rastenleiste 70 kommt.

Wie insbesondere aus Figur 2 ersichtlich ist, verläuft die Löseflanke 48 dann, wenn sich der Mitnehmer 36 auf ihr befindet, klappsymmetrisch zu einer Lotrechten zur Längsführung 24 und durch die Achse 32. Dadurch kann der Freigabehebel 46 die aus den Figuren ersichtliche, geringe Bauhöhe erhalten, zugleich ist das Maß der Bewegung des Mitnehmers 36 innerhalb der Betätigungsbucht 62 gering, diese kann also auch eine geringe Höhe haben. In einer alternativen Ausbildung ist keine Betätigungsbucht 62 vorgesehen, vielmehr ist der Steuerhebel 34 am Mitnehmer 36 an den Schlepphebel 60 angelenkt. Dann aber hat der Merkzapfen 68 eine ausreichende Länge, um während der geringen Schwenkbewegung des Schlepphebels 60, wenn der Mitnehmer 36 die Halteflanke 50 entlangfährt, stets ausreichend tief in der Rastenleiste 70 zu bleiben.

Bei dem bisher beschriebenen Kraftfahrzeugsitz ist die Kippbewegung der Rückenlehne 20 starr mit der Längsverschiebung des Sitzes in der Längsführung 24 gekoppelt. Dadurch können Probleme auftreten, wenn der Sitz ohnehin schon innerhalb der Längsführung 24 relativ weit nach vorn verschoben wurde, bevor seine Rückenlehne gekippt und er noch weiter nach vorn verschoben werden soll, denn die Rückenlehne 20 kann beispeilsweise an ein Lenkrad anschlagen und dadurch die weitere Bewegung nach vorn behindern, oder die Längsführung 24 schlägt an einen normalerweise vorgesehenen, eigenen Anschlag an, wodurch wiederum das Kippen der Rückenlehne 20 blockiert ist. Um diese Probleme zu beseitigen, ist das vorderste Fenster für den Merkzapfen 68 nach vorn frei, so daß die Rückenlehne 20 gekippt werden kann, ohne daß eine Längsverschiebung erfolgt. In einer anderen Ausführung ist der Steuerhebel 34 nicht drehstarr mit der Rückenlehne 20, sondern um die Achse 32 schwenkbar mit dieser verbunden, er wird durch eine Feder gegen einen Anschlag 84 gedrückt. Durch den Anschlag wird sichergestellt, daß die in Figur 1 gezeigte Position stets wieder eingenommen wird. Der Anschlag 84 ist mit der Rückenlehne 20 verbunden. Die Feder ist vorzugsweise so ausgeführt, daß sie während des Beginns einer Kippbewegung der Rückenlehne 20 zunächst steif ist, anschließend aber, wenn die Rückenlehne 20 in die stärkste Kipposition gelangt praktisch kraftlos ist und somit die Rückenlehne 20 nicht selbsttätig wieder aufgerichtet wird.

**Patentansprüche**

1. Kraftfahrzeugsitz, der durch Kippen seiner Rückenlehne (20) längsverschiebbar ist und einen Sitzteil (22) sowie eine Längsführung (24) aufweist,
- die durch eine Arretiervorrichtung (72) arretierbar ist und
- die aus einer Bodenschiene (28) und einer Sitzschiene (26) aufgebaut ist, von denen die Bodenschiene (28) mit dem Kraftfahrzeugchassis verbindbar ist und eine Rastenleiste (70) aufweist und die Sitzschiene (26) einerseits den Sitzteil (22) trägt und andererseits über einen Tragarm (30) und über ein ein- und feststellbares Rückenlehnengelenk mit der Rückenlehne (20) verbunden ist,
dadurch gekennzeichnet, daß die Rückenlehne (20) mit einem Steuerhebel (34) verbunden ist, der vom Rücklehnengelenk in Richtung zur Sitzschiene (26) vorspringt und einen Mitnehmer (36) aufweist, und daß an der Sitzschiene (26) einerseits ein Freigabehebel (46) angelenkt ist,
- der eine Löseflanke (48) und eine Halteflanke (50) aufweist, die jeweils mit dem Mitnehmer (36) zusammenwirken und
- der über eine Mitnehmereinheit mit der Arretiervorrichtung (78) verbunden ist
und andererseits ein Schlepphebel (60) angeordnet ist,
- der eine Betätigungsbucht (62) hat, in die der Mitnehmer (36) eingreift,
- der einen nach unten in Richtung der Rastenleiste (70) der Bodenschiene (28) vorspringenden und dieser zugeordneten Merkzapfen (68) aufweist und
- der über ein Schubgelenk (64, 66) mit der Sitzschiene (28) verbunden ist,
so daß in Normalposition der Rückenlehne (20) der Freigabehebel (46) und der Schlepphebel (60) inaktiv sind, in einer Zwischenposition der Rückenlehne (20) der Merkzapfen (68) in die Rastenleiste (70) eingegriffen hat, die Arretiervorrichtung (72) aber arretiert ist, und in einer vollständig gekippten Position der Rückenlehne (20) die Arretiervorrichtung (72) freigegeben und die Sitzschiene (26) mit Sitzteil (22) und Rückenlehne (20) innerhalb des durch das Schubgelenk (64, 66) bzw. eines Anschlags der Längsführung (24) definierten Weges gegenüber der Bodenschiene (28) frei verschiebbar ist.

2. Kraftfahrzeugsitz nach Anspruch 1, dadurch gekennzeichnet, daß ein zweites Schubgelenk (80, 82) zwischen dem Schlepphebel (60) und dem Freigabehebel (46) vorgesehen ist, wobei vorzugsweise am Schlepphebel (60) unterhalb der Betätigungsbucht (62) ein Bolzen (80) vorspringt, der in ein parallel zur Halteflanke (50) verlaufendes Langloch (82) des Freigabehebels (46) greift.

3. Kraftfahrzeugsitz nach Anspruch 1 oder 2, dadurch gekennzeichnet, daß die Mitnehmereinrichtung als Schleppkupplung ausgebildet ist und insbesondere zwischen einem Hals (52) des Freigabehebels (46) und einer Abwinklung des Tragarms (30) ein Seil (56) eines Bowdenzuges (54) angeordnet ist, der mit einem Betätigungshebel (78) der Arretiervorrichtung (72) zugverbunden ist.

4. Kraftfahrzeugsitz nach einem der Ansprüche 1 bis 3, dadurch gekennzeichnet, daß die freie Länge des Merkzapfens (68) größer ist als die Bogenhöhe des durch die Halteflanke (50) begrenzten Kreissegmentes.

5. Kraftfahrzeugsitz nach einem der Ansprüche 1 bis 4, dadurch gekennzeichnet, daß bei Anlage des Mitnehmers (36) an der Halteflanke (50) die Halteflanke (50) klappsymmetrisch zu einer Lotrechten durch die Achse (32) und zur Längsführung (24) verläuft.

6. Kraftfahrzeugsitz nach einem der Ansprüche 1 bis 5, dadurch gekennzeichnet, daß die Rückenlehne (20) zwei der Schwenkbewegung um die Achse (32) zugeordnete Anschläge (40, 42) hat, die mit einem Anschlagzapfen (38) des Steuerhebels (34) zusammenwirken.

7. Kraftfahrzeugsitz nach einem der Ansprüche 1 bis 6, dadurch gekennzeichnet, daß der Freigabehebel (46) im hinteren Bereich der Sitzschiene (24) um eine Achse (44) schwenkbar gelagert ist und daß in der vorderen Hälfte der Sitzschiene (26) ein Bolzen (64) gehalten ist, der von einem im Schlepphebel (60) ausgebildeten Langloch (66) umgriffen ist.

8. Kraftfahrzeugsitz nach einem der Ansprüche 1 bis 7, dadurch gekennzeichnet, daß die Hebel (34, 46 und 60) flache, längliche Blechstanzteile sind und daß der Freigabehebel (46) und der Schlepphebel (60) im wesentlichen in Längsrichtung der Längsführung (24) angeordnet sind.

9. Kraftfahrzeugsitz nach einem der Ansprüche 1 bis 8, dadurch gekennzeichnet, daß der Mitnehmer (36) eine Rolle aufweist.

10. Kraftfahrzeugsitz nach einem der Ansprüche 1 bis 9, dadurch gekennzeichnet, daß am vorderen Ende des Schlepphebels (60) die normale Arretiervorrichtung (72) angeordnet ist, die normalerweise eine Verriegelung bewirkt, aber nach Herunterschwenken des Merkzapfens (68) außer Eingriff gerät.

11. Kraftfahrzeugsitz nach einem der Ansprüche 1 bis 10, dadurch gekennzeichnet, daß am Schlepphebel (60) vorn ein Betätigungshebel (78) angreift und daß das Langloch (66) in seinem hinteren Bereich ausreichend weit ist, um ein Endarretierten der Arretiervorrichtung (72) ohne Eingriff des Merkzapfens (68) in die Rastenleiste (70) zu ermöglichen.

12. Kraftfahrzeugsitz nach einem der Ansprüche 1 bis 11, dadurch gekennzeichnet, daß sich die Öffnungen für den Merkzapfen (68) in der Rastenleiste (70) nur soweit nach vorn erstrecken, wie der Verstellweg abzüglich der Vorverlagerung lang ist.

13. Kraftfahrzeugsitz nach einem der Ansprüche 1 bis 12, dadurch gekennzeichnet, daß zwischen dem Schlepphebel (60) und dem Freigabehebel (46) eine Verbindungs- oder Umlenklasche angeordnet ist.

14. Kraftfahrzeugsitz nach einem der Ansprüche 1 bis 13, dadurch gekennzeichnet, daß der Steuerhebel (34) drehstarr mit der Rückenlehne (20) verbunden ist oder daß er elastisch mit der Rückenlehne (20) schwenkverbunden ist und an einem Anschlag (84) anliegt.

**Revendications**

1. Sièges de véhicule automobile qui peut coulisser longitudinalement par basculement de son dossier (20) et qui présente une partie de siège (22) ainsi qu'un organe de guidage longitudinal (24),
   - qui peut être bloqué par un dispositif de blocage (72) et
   - qui est constitué d'un rail de fond (98) et d'un rail de siège (26) dont le rail de fond (28) peut être assemblé au châssis du véhicule et présente une barre à crans (70) et le rail de siège (26) porte d'une part la partie de siège (22) et est assemblé d'autre part au dossier (20), par un bras de support (30) et par une articulation de dossier réglable et fixable,
   caractérisé en ce que le dossier (20) est relié à un levier de commande (34) qui fait saillie de l'articulation de dossier en direction du rail de siège (26) et présente un entraîneur (36) et en ce que sur le rail de siège (26) s'articule d'une part un levier de déverrouillage (46)
   - qui présente un flanc de libération (48) et un flanc de maintien (50) qui coopèrent chacun avec l'entraîneur (36) et
   - qui est relié au dispositif de blocage (78), par une unité d'entraîneur,
   et est disposé d'autre part un levier d'entraînement (60)
   - qui possède une anse d'actionnement (62) dans laquelle s'engage l'entraîneur (36),
   - qui présente un téton de marquage (68), faisant saillie vers le bas, en direction de la barre à crans (70) du rail de fond (28) et associé à celui-ci et
   - qui est relié au rail de siège (28) par un joint à glissière (64, 66),
   de sorte qu'en position normale du dossier (20), le levier de déverrouillage (46) et le levier d'entraînement (60) sont inactifs, dans une position intermédiaire du dossier (20), le téton de marquage (68) est engagé dans la barre à crans (70), mais le dispositif de blocage (72) est bloqué et dans une position totalement basculée du dossier (20), le dispositif de blocage (72) est libéré et le rail de siège (26) avec la partie de siège (92) et le dossier (20) peut coulisser librement par rapport au rail de fond (28), à l'intérieur du parcours défini par le joint à glissière (64, 66) ou par une butée de l'organe de guidage longitudinal (24).

2. Siège de véhicule automobile selon la revendication 1, caractérisé en ce qu'on prévoit un deuxième joint A glissière (80, 82), entre le levier d'entraînement (60) et le levier de déverrouillage (46), un axe (80) qui s'engage dans un trou allongé (82) du levier de déverrouillage (86), parallèle au flanc de maintien (50), faisant saillie de préférence sur le levier d'entraînement (60), au-dessous de l'anse d'actionnement (62).

3. Siège de véhicule automobile selon la revendication 1 ou 2, caractérisé en ce que le dispositif à entraîneur est un coupleur à entraînement et en particulier un câble (56) d'une commande Bowden (54) est disposé entre un col (52) du levier de déverrouillage (46) et un coude du bras de support (30), lequel câble est relié en traction avec un levier d'actionnement (78) du dispositif de blocage (72).

4. Siège de véhicule automobile selon l'une des revendications 1 à 3, caractérisé en ce que la longueur libre du téton de marquage (68) est supérieure à la hauteur d'arc du segment de cercle limité par le flanc de maintien (50).

5. Siège de véhicule automobile selon l'une des revendications 1 à 4, caractérisé en ce que, lorsque l'entraîneur (36) s'applique contre le flanc de maintien (50), celui-ci est basculé dans une position symétrique par rapport à une verticale passant par l'axe 32 et par rapport à l'organe de guidage longitudinal (24).

6. Siège de véhicule automobile selon l'une des revendications 1 à 5, caractérisé en ce que le dossier (20) possède deux butées (40, 42) pour le mouvement de pivotement autour de l'axe (39), lesquelles butées coopèrent avec un téton de butée (38) du levier de commande (34).

7. Siège de véhicule automobile selon l'une des revendications 1 à 6, caractérisé en ce que le levier de déverrouillage (46) est monté dans la région arrière du rail de siège (24), de manière à pouvoir pivoter autour d'un axe (44) et en ce que dans la moitié avant du rail de siège (26) est fixé un axe (64) qui est entouré par un trou allongé (66), pratiqué dans le levier d'entraînement (60).

8. Siège de véhicule automobile selon l'une des revendications 1 à 7, caractérisé en ce que les leviers (34, 46 et 60) sont des pièces de tôle découpées plates et allongées et en ce que le levier de déverrouillage (46 et le levier d'entraînement (60) sont disposés à peu près dans la direction longitudinale de l'organe de guidage longitudinal (24).

9. Siège de véhicule automobile selon l'une des revendications 1 à 8, caractérisé en ce que l'entraîneur (36) présente un galet.

10. Siège de véhicule automobile selon l'une des revendications 1 à 9, caractérisé en ce qu'à l'extrémité avant du levier d'entraînement (60) est disposé le dispositif de blocage (72) normal qui entraîne normalement un verrouillage mais qui, après abaissement du téton de marquage (68), n'est plus en prise.

11. Siège de véhicule automobile selon l'une des revendications 1 à 10, caractérisé en ce qu'un levier d'actionnement (78) agit sur le levier d'entraînement (60), à l'avant, et en ce que le trou allongé (66) est suffisamment large, dans sa région arrière, pour permettre un blocage final du dispositif de blocage (72), sans que le téton de marquage (68) s'engage dans la barre à crans (70).

12. Siège de véhicule automobile selon l'une des revendications 1 à 11, caractérisé en ce que les ouvertures destinées au téton de marquage (68), pratiquées dans la barre à crans (70) ne s'étendent vers l'avant que sur la longueur correspondant au parcours de réglage, diminué de l'avance.

13. Siège de véhicule automobile selon l'une des revendications 1 à 12, caractérisé en ce qu'on dispose une éclisse d'assemblage ou de déviation, entre le levier d'entraînement (60) et le levier de déverrouillage (46).

14. Siège de véhicule automobile selon l'une des revendications 1 à 13, caractérisé en ce que le levier de commande (34) est relié fixe en rotation au dossier (20) ou en ce qu'il est relié pivotant, de manière élastique, au dossier (20) et s'applique contre une butée (84).

**Claims**

1. Motor vehicle seat which is longitudinally displaceable by tipping the back (20) of the seat and which comprises a seat unit (22) and a longitudinal guide mechanism (24),
   - which is lockable by means of a locking device (72) and
   - which is constructed from a floor rail (28) and a seat rail (26) of which the floor rail (28) is joinable together with the motorcar chassis and comprises a notched strip (70), and the seat rail (26) bears on the one side the seat unit (22), and on the other side is joined via a support arm (30) and via an adjustable and fixable seat back link with the back (20) of the seat,
   wherein the seat back (20) is joined together with a control lever (34) which protrudes from the seat back link in the direction of the seat rail (26) and comprises a driver (36), and a release lever (46) is joined on the one side with the seat rail (26),
   - which comprises a releasing flank (48) and a retaining flank (50) which respectively cooperate with the driver (36) and
   - which is joined via a driver unit with the locking device (78)
   and on the other side is arranged a slip lever (60),
   - which has an actuation inlet (62), into which the driver (36) engages,
   - which comprises an indexing gudgeon (68) which protrudes downwards in the direction of the notched strip (70) of the floor rail (28) and is coordinated with the same and
   - which is joined via a thrust link (64, 66) together with the seat rail (28),
   so that in the normal position of the seat back (20) the release lever (46) and the slip lever (60) are inactive, that in an intermediate position of the seat back (20) the indexing gudgeons (68) have engaged into the notched strip (70) but the locking device (72) is locked, and that in a fully tipped position of the seat back (20) the locking device (72) is released and the seat rail (26) together with the seat unit (22) and seat back (20) are freely displaceable in relation to the floor rail (28) within a path defined by the thrust link (64, 66) or respectively by a limit stop on the longitudinal guide mechanism (24).

2. Motorcar seat according to claim 1, wherein a second thrust link (80, 82) is provided between the slip lever (60) and the release lever (46), whereby preferably a bolt (80) protrudes on the slip lever (60) below the actuation inlet (62), which bolt engages into a slotted hole (82) of the release lever (46) and which slotted hole (82) runs parallel to the retaining flank (50).

3. Motorcar seat according to claim 1 or 2, wherein the driver device is constituted in the form of a slip coupling and in particular a cable (56) of a Bowden control (54) is arranged between a neck (52) of the release lever (46) and an angle in the support arm (30), which Bowden control is joined by cable with an actuation lever (78) of the locking device (72).

4. Motorcar seat according to one of the claims 1 to 3, wherein the free length of the indexing gudgeon (68) is larger than the arc height of the segment limited by the retaining flank (50).

5. Motorcar seat according to one of the claims 1 to 4, wherein when the driver (36) is applied to the retaining flank (50), the retaining flank (50) runs fold-symmetrically to a plumbline through the axis (32) and to the longitudinal guide mechanism (24).

6. Motorcar seat according to one of the claims 1 to 5, wherein the seat back (20) has two limit stops (40, 42) coordinated with the pivoting movement about the axis (32), which limit stops cooperate with a stop gudgeon (38) of the control lever (34).

7. Motorcar seat according to one of the claims 1 to 6, wherein the release lever (46) is mounted pivotably about an axis (44) in the rear zone of the seat rail (24) and a bolt (64) is retained in the front half of the seat rail (26), which bolt (64) is surrounded by a slotted hole (66) comprised by the slip lever (60).

8. Motorcar seat according to one of the claims 1 to 7, wherein the levers (34, 46 and 60) are flat, longish, stamped sheet metal parts and the release lever (46) and the slip lever (60) are essentially arranged in the longitudinal direction of the longitudinal guide mechanism (24).

9. Motorcar seat according to one of the claims 1 to 8, wherein the driver (36) comprises a roller.

10. Motorcar seat according to one of the claims 1 to 9, wherein at the front end of the slip lever (60) the normal locking device (72) is arranged, which device normally brings about locking, but becomes disengaged after pivoting the indexing gudgeon (68) downwards.

11. Motorcar seat according to one of the claims 1 to 10, wherein an actuation lever (78) is applied to the slip lever (60) at the front and the slotted hole (66) is sufficiently wide in its rear zone to make possible an end locking of the locking device (72) without engagement of the indexing gudgeon (68) into the notched strip (70).

12. Motorcar seat according to one of the claims 1 to 11, wherein the openings for the indexing gudgeon (68) extend into the notched strip (70) only up to the length of the shift travel less the predisplacement.

13. Motorcar seat according to one of the claims 1 to 12, wherein a joint or deflexion strap is arranged between the slip lever (60) and the release lever (46).

14. Motorcar seat according to one of the claims 1 to 13, wherein the control lever (34) is joined torsionally stiffly with the seat back (20) or it is pivotably joined elastically with the seat back (20) and lies up against a limit stop (84).

EP 0 286 693 B1

FIG. 1

FIG. 2